# EUROPEAN PATENT APPLICATION

(11) **EP 4 761 232 A1**
(43) Date of publication of application: **17.06.2026**
(21) Application number: 24219515.4
(22) Date of filing: 12.12.2024
(51) Int. Cl.: H04N 7/14

(54) **SYSTEM AND DEVICE FOR CREATING SPATIAL MODELS OF MULTI-DEVICE ENVIRONMENTS**

(71) Applicant: GN Hearing A/S, 2750 Ballerup (DK)
(72) Inventor: LAROCHE, Clément, 2750 Ballerup (DK)
(74) Representative: AWA Denmark A/S

(57) **Abstract**

Disclosed is a system for creating a spatial model of a room comprising a plurality of audio and / or video devices. The system comprises a first device and a second device, the first device being a video device capable of capturing a stream of images of the room and the second device being an audio and/or video device. The system comprises one or more processing units configured to: obtaining a first image captured by the first device; and creating a spatial model of the room by processing the first image to identify the second device and estimate the location of the second device in the room.

## Description

### Field

The present disclosure relates to a system for creating a spatial model of a room, a video device for use in a system for creating a spatial model of a room, a method for creating a spatial model of a room, a computer program product, and a meeting room for conducting an online meeting.

### Background

In multi-device environments such as a conference or meeting rooms equipped with several A/V devices, the coordination and processing capabilities of these devices often lack optimization due to inadequate knowledge of each device's physical orientation and location relative to others in the room.

Current systems primarily use manual configuration or audio cues for localization, which can be limited in accuracy.

As an example, if a conference room is provided with multiple cameras or microphones processing the different recorded signals to optimize the online meeting experience requires knowledge of the position of the individual devices.

Furthermore, optimizing the performance of the individual device should preferably be automated to save cost and enable the system to adapt to changes in the environment.

Examples of such changes could be provision of new devices or positioning of a movable microphone or camera.

Thus it remains a problem to provide an improved system / device for allowing improved processing of signals recorded by A/V devices.

### Summary

According to a first aspect, the present disclosure relates to a system for creating a spatial model of a room comprising a plurality of audio and / or video devices, wherein the system comprises a first device and a second device, the first device being a video device capable of capturing a stream of images of the room and the second device being an audio and/or video device, and wherein the system further comprises one or more processing units configured to:
obtaining a first image captured by the first device; and
creating a spatial model of the room by processing the first image to identify the second device and estimate the location of the second device in the room.

Consequently, by processing an image captured by the first device to form a spatial model a simple and effective way of creating a spatial model of the room is provided.

The spatial model may specify an estimated position of the first device relative to the second device. The spatial model may further specify the position of the devices relative to other elements of the room such as the floor, walls, ceiling, and additional devices. As an example, the spatial model may comprise a digital landmark for each device and / or other element identified. The digital landmark may be an estimated position and optionally also an estimated orientation.

The processing unit(s) of the one or more processing units may be any processing unit, such as a central processing unit (CPU), a graphics processing unit (GPU), a microcontroller unit (MCU), a field-programmable gate array (FPGA), or any combination thereof. The processing unit may comprise one or more physical processors and/or may be combined by a plurality of individual processing units.

The first device may be a pure video device only capable of capturing a stream of images of the room or a combined audio and video device. An audio device may be capable of recording audio, playing audio or both recording audio and playing audio. The first device may be a video device suitable for use with online meeting systems. The second device may be a pure video device, a pure audio device, or a combined audio and video device. A processing unit of the one or more processing units may be provided in the first and / or second device. Alternatively / additionally a processing unit of the one or more processing units may be provided in another device communicatively coupled to the first device. The first device may be capable of obtaining further signals such as an audio signal and provide the further signal to the one or more processing units, wherein the one or more processing units may additionally use the additional signals for creating the spatial model.

The one or more processing units may be configured to process the first image by using traditional image processing techniques. As an example, landmarks on the second device may be identified in the first image and used to estimate the location of the second device in the room.

In some embodiments, the one or more processing units are configured to process the first image and identify the location of the second device in the room by using a machine learning data architecture trained to identify audio and/or video devices in images.

Consequently, an efficient method of creating a spatial model is provided. By using a machine learning data architecture a precise estimate of the location may be provided as the machine learning data architecture may be trained to estimate the location of specific devices which typically are used together.

The machine learning data architecture may be a supervised machine learning architecture, trained by being provided with a training data set comprising images from rooms, where different devices are provided in the images and where the location of the different devices in the room are known.

In some embodiments, the machine learning data architecture is an artificial neural network such as a deep structured learning architecture.

The images may be real images obtained by arranging different devices in a plurality of test rooms at different locations.

Alternatively or additionally, the images may be artificially generated using 3D computer software. As an example, a large training data set may be generated by randomly generating a 3D model of a number of rooms having different dimensions and being provided with typical furniture. 3D models of different devices may then randomly be arranged at different locations in the rooms and artificial images may be generated by 3D rendering the 3D scene. The 3D rendering should preferably take into account the optics of the first device so that the 3D renderings correspond as closely as possible to real world images. This would allow a large training data set to be created where the precise location of the device in the images are known.

In some embodiments, the machine learning data architecture is further trained to identify the position of audio and/or video devices relative to the device capturing the image and wherein the machine learning data architecture is further configured to estimate the location of the second device relative to the first device.

In some embodiments, the machine learning data architecture is further trained to identify the orientation of audio and/or video devices relative to the device capturing the image and wherein the machine learning data architecture is further configured to estimate the orientation of the second device relative to the first device.

Consequently, this may be used to create a more precise spatial model capable of taking into account directivity of the different sensor of the devices. As an example, both speakers and microphones typically have a high degree of directivity. Thus, taking this directivity into account allows better audio processing.

The machine learning data architecture may be trained to identify the orientation by additionally noting the orientation of the devices for each image in the training data set.

In some embodiments, the machine learning data architecture is further trained to identify the position of elements of the room relative to the first device and wherein the machine learning data architecture is further configured to estimate the position of elements of the room relative to the first device.

In some embodiments, the elements of the room are the ceiling, the floor, and / or the walls.

Consequently, a more precise spatial model of the room may be provided.

The machine learning data architecture may be trained to identify the position of elements in the room by additionally noting the position of the elements in the room for each image in the training data set.

In some embodiments, the second device is an audio and video device and wherein the one or more processing units are further configured to:
obtaining a second image captured by the second device;
creating the spatial model of the room by processing the first image and the second image.

Consequently, by additionally processing images captured by the second device a more precise spatial model may be created.

The second image may be processed in the same ways as the first image e.g. using either traditional image processing techniques or a machine learning data architecture

In some embodiments, the first device comprises a first processing unit, the first processing unit being a processing unit of the one or more processing units.

Consequently, the spatial model may be created without providing the device with access to external processing capabilities.

The one or more processing units may consist of the first processing units or the first processing unit in combination with further processing units.

In some embodiments, the system comprises a second processing unit arranged outside of the room, the second processing unit being a processing unit of the one or more processing units and the first device being communicatively coupled to the second processing unit.

Consequently, the first device and the second device may be simpler device as they are not required to be able to perform complex computations.

The second device may also be communicatively coupled to the second processing unit. The second processing unit and the first device may be communicatively coupled via a LAN or a WAN such as the internet.

The one or more processing units may consist of the second processing units or the second processing unit in combination with further processing units.

In some embodiments, the first device and the second device are configured to be automatically communicatively paired in response to the identification of the second device in the first image.

Consequently, an efficient and simple way of pairing the individual device is provided. This may make it even simpler to set up a new room for online meetings.

The spatial model may be used for processing video signals recorded by one or more video devices in the room resulting in an expanded spatial model further specifying the location of people in the room, e.g. if the a person is identified in the views from one or more video devices and the respective position of the one or more video devices is provided by the initial spatial model, the position of the person in the room may be estimated. The expanded spatial model may continuously be updated.

In some embodiments, the one or more processing units are configured to use the spatial model for processing an audio signal recorded in the room or an audio signal that are to be played back in the room, preferably the audio signal is processed to provide:
voice pickup optimization;
noise suppression;
echo cancelation;
source localization;
playback optimization;
dynamic volume adjustment; or
individual listening zones.

The used spatial model may be the initial spatial model or the expanded spatial model specifying both the location of devices within the room and the location of people within the room.

The spatial model may further be used to stitch together video signals from different video devices and / or estimate a 3D model of the meeting room with the meeting participants allowing remote participants to select a custom view of the estimated 3D model. The 3D model may be continuously updated.

According to a second aspect, the disclosure relates to a video device for use in a system for creating a spatial model of a room as disclosed in relation to the first aspect of the invention, wherein the video device is configured to:
capture a first image of a second device in the room;
provide one or more processing units with the first image allowing the one or more processing units to create a spatial model of the room by processing the first image to identify the second device and estimate the location of the second device in the room.

In some embodiments, the video device comprises a first processing unit, the first processing unit being configured to:
create a spatial model of the room by processing the first image to identify the second device and estimate the location of the second device in the room.

In some embodiments, the second device is an audio and video device, and wherein the processing unit is further configured to:
obtain a second image captured by the second device;
create the spatial model of the room by processing the first image and the second image.

According to a third aspect, the disclosure relates to a method for creating a spatial model of a room comprising a first device and a second device, wherein the first device being a video device capable of capturing a stream of images of the room and the second device being an audio and/or video device, and wherein the method comprises:
obtaining a first image captured by the first device;
creating a spatial model of the room by processing the first image to identify the second device and estimate the location of the second device in the room.

In some embodiments, a machine learning data architecture trained to identify audio and/or video devices in images is used to process the first image.

In some embodiments, the machine learning data architecture is further trained to identify the position of audio and/or video devices relative to the device capturing the image and wherein the machine learning data architecture is further used to estimate the location of the second device relative to the first device.

In some embodiments, the machine learning data architecture is further trained to identify the orientation of audio and/or video devices relative to the device capturing the image and wherein the machine learning data architecture is further used to estimate the orientation of the second device relative to the first device.

In some embodiments, the machine learning data architecture is further trained to identify the position of elements of the room relative to the first device and wherein the machine learning data architecture is further used to estimate the position of elements of the room relative to the first device.

In some embodiments, the elements of the room are the ceiling, the floor, and / or the walls.

In some embodiments, the second device is an audio and video device and wherein the method further comprises:
obtaining a second image captured by the second device;
creating the spatial model of the room by processing the first image and the second image.

In some embodiments, the first device comprises a first processing unit, the first processing unit being a processing unit used for creating the spatial model of the room by processing the first image and / or the second image.

In some embodiments, a second processing unit is arranged outside of the room, the first device being communicatively coupled to the second processing unit and wherein first processing unit and / or the second processing unit are used for creating the spatial model of the room by processing the first image and / or the second image.

In some embodiments, the first device and the second device are configured to be automatically communicatively paired in response to the identification of the second device in the first image.

In some embodiments, the spatial model is used for processing an audio signal recorded in the room or an audio signal that are to be played back in the room, preferably the audio signal is processed to provide:
voice pickup optimization;
noise suppression;
echo cancelation;
source localization;
playback optimization;
dynamic volume adjustment; or
individual listening zones.

According to a fourth aspect, the disclosure relates to a computer program product comprising program code means adapted to cause a data processing system to perform the steps of the method as disclosed in relation to the third aspect of the disclosure, when said program code means are executed on the data processing system.

In some embodiments, said computer program product comprises a non-transitory computer-readable medium having stored thereon the program code means.

According to a fifth aspect, the disclosure relates to a meeting room for conducting an online meeting, the meeting room comprising a display for displaying a stream of images of the online meeting and a video device as disclosed in relation to the second aspect of the invention.

In some embodiments, the video device forms part of a system as disclosed in relation to the first aspect of the disclosure, and wherein the system being configured to create a spatial model of the room for enhancing the online meeting.

The different aspects of the present disclosure can be implemented in different ways including systems, devices, methods, computer program products, and meeting rooms described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present disclosure, will be further elucidated by the following illustrative and non-limiting detailed description of embodiments of the present disclosure, with reference to the appended drawings, wherein:
Fig. 1 shows a schematic drawing of a system for creating a spatial model of a room according to an embodiment of the disclosure.
Fig. 2 shows a schematic drawing of a meeting room comprising a system for creating a spatial model of a room according to an embodiment of the disclosure.
Fig. 3 shows a schematic drawing of a video device for use in a system for creating a spatial model of a room according to an embodiment of the disclosure.
Fig. 4 shows a flowchart of a method for creating a spatial model of a room comprising a first device and a second device.

### Detailed description

In the following description, reference is made to the accompanying figures, which show by way of illustration how the embodiments of the present disclosure may be practiced.

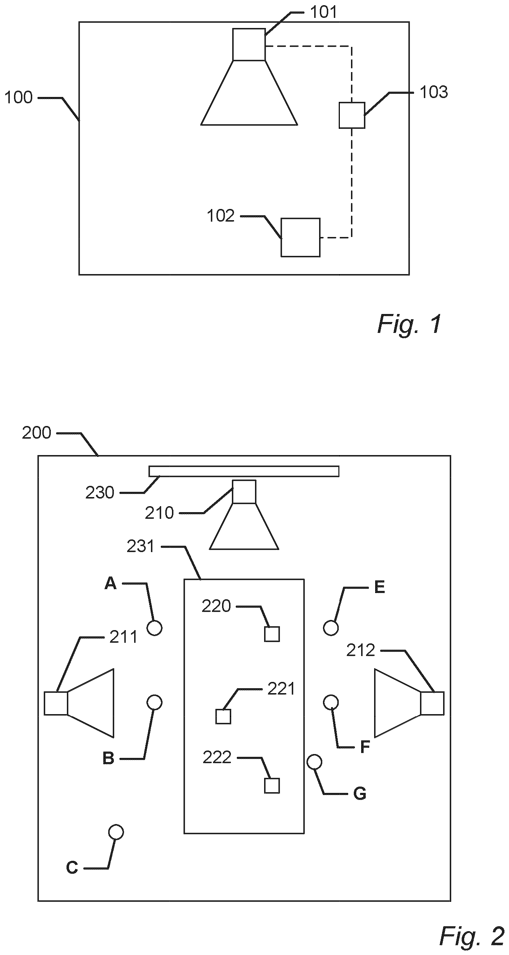

Fig. 1 shows a schematic drawing of a system 100 for creating a spatial model of a room according to an embodiment of the disclosure. The system 100 comprises a first device 101 and a second device 102, the first device 101 being a video device capable of capturing a stream of images of the room and the second device 102 being an audio and/or video device. The system further comprises one or more processing units 103 configured to: obtaining a first image captured by the first device 101; and creating a spatial model of the room by processing the first image to identify the second device 102 and estimate the location of the second device 102 in the room. In this embodiment, the one or more processing units consist of a single processing unit 103. In this embodiment, the processing unit 103 is located outside of the first device 101 and the second device 102. However, in other embodiments the processing unit 103 may be located within the first device 101 or the second device 102. The processing unit 103 should be communicatively coupled with the first device 101 in order to receive the first image, either directly or indirectly e.g. via a server. In this embodiment, the processing unit 103 is communicatively coupled to the second device 102. However, in other embodiments, the second device 102 may not be communicatively coupled to the processing unit 103.

Preferably, the processing unit 103 is configured to process the first image and identify the location of the second device in the room by using a machine learning data architecture trained to identify audio and/or video devices in images. This may allow the processing unit 103 to effectively identify different types of AV devices. The machine learning data architecture may further be trained to identify the position of audio and/or video devices relative to the device capturing the image. This may allow the machine learning data architecture to further estimate the location of the second device 102 relative to the first device 101. The machine learning data architecture may further be trained to identify the orientation of audio and/or video devices relative to the device capturing the image. This may allow the machine learning data architecture to further estimate the orientation of the second device relative 102 to the first device 101.

Fig. 2 shows a schematic drawing of a meeting room 200 comprising a system for creating a spatial model of a room according to an embodiment of the disclosure. The system comprises a first device 210 and a second device 211, and a third device 212. The first device 210, the second device 211 and the third device 212 are all video devices capable of capturing a stream of images of the room 200. The system further comprises one or more processing units (not shown) configured to: obtaining a first image captured by the first device 210; a second image captured by the second device 211 and a third image captured by the third device 212 and create a spatial model of the room 200 by processing the first image, the second image and the third image. The room further comprises a first audio device 220, a second audio device 221, and a third audio device 222. The room 200 additionally, comprises a table 231 and a display 230. The first, second and third audio device 220-222 may be combined microphones and loudspeakers. The spatial model may specify estimated location in the room 200 of the video device 210-212 and the audio devices 220-222.

As an example, the first image may be processed to estimate the location of all the devices visible in the first image with respect to the first video device 210, the second image may be processed to estimate the location of all the devices visible in the second image with respect to the second video device 211, and the third image may be processed to estimate the location of all the devices visible in the third image with respect to the third video device 212. The images may be processed by a machine learning data architecture trained to identify audio and/or video devices in images and identify the position of audio and/or video devices relative to the device capturing the image. If the first, second and third video device are identical, the machine learning data architecture processing the images may be the same. Alternatively, if the first, second, and third video device 210, 211, 212 are different, then different machine learning data architectures may be used to process the different images. This will result in position estimates of the devices in three local coordinate systems, that subsequently may be merged into a global coordinate system forming the spatial model of the room.

Alternatively, a spatial model of the room may be directly created by processing the first, second and third image together. As an example, the images may be processed by a machine learning data architecture trained to identify audio and/or video devices in a plurality of images and directly create the spatial model from the plurality of images.

Once a spatial model has been created it may be used to improve the processing of the signals recorded. As an example, if a person is located at position A, a processing unit may use the spatial model of the room to process the audio signal recorded by the audio devices 220-222 for voice pickup optimization at position A e.g. by focusing / beamforming the recorded audio signals. Additionally, dynamic volume adjustment may be used to correct the loudness so that the loudness of the recorded audio signal is the same irrespectively if a person is located at position G very close to audio devices 220-222 or at position C or E being at a greater distance to the audio devices 220-222.

The spatial model may also be used to estimate the location of a person speaking. As an example, if the meeting room 200 is used for an online or hybrid meeting, then the spatial model may be used to process audio signals recorded in the room by the audio device 220-222 to identify the person speaking and the persons location, which may then allow the video device 210-212 to focus on the person e.g. allowing the video system to enlarge the image of a person located at position B in the room 200 when that person is speaking and enlarge the image of a person located at position F when that person is speaking, on the displays of others participating in the meeting from other locations.

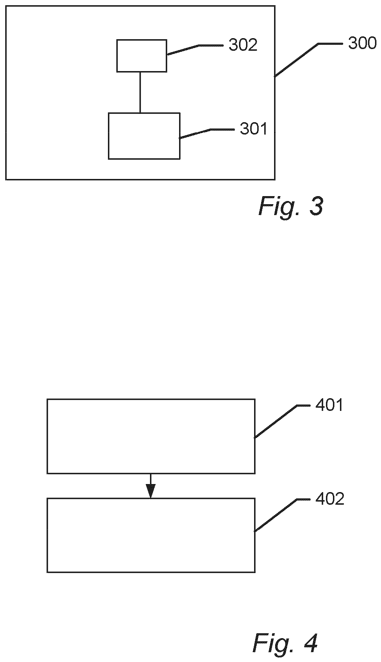

Fig. 3 shows a schematic drawing of a video device 300 for use in a system for creating a spatial model of a room according to an embodiment of the disclosure. The video device 300 comprises a video capturing unit 301 and a processing unit 302. The video device 300 is configured to: capture a first image of a second device in a room using the video capturing unit 301; and provide one or more processing units with the first image allowing the one or more processing units to create a spatial model of the room by processing the first image to identify the second device and estimate the location of the second device in the room. The processing unit 302 may be one of the one or more processing units. Alternatively, the one or more processing units may be provided remote from the device 300 and directly or indirectly communicatively coupled to the device allowing the device to send the first image to the one or more processing units. The video device 300 may correspond to the video device 101 in Fig. 1 or video devices 210, 211, 212 in Fig. 2.

Fig. 4 shows a flowchart of a method for creating a spatial model of a room comprising a first device and a second device. The first device being a video device capable of capturing a stream of images of the room and the second device being an audio and/or video device, e.g., the first device may be a device 300 as disclosed in relation to Fig. 3 and the second device may also be a device 300 as disclosed in relation to Fig. 3 or an audio device 220-222 disclosed in relation to Fig. 2. The method comprises:
obtaining a first image captured by the first device 401; and creating a spatial model of the room by processing the first image to identify the second device and estimate the location of the second device in the room 402.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

### Enumerated items

Further embodiment of the disclosure is provided in the following enumerated items:
1. A system for creating a spatial model of a room comprising a plurality of audio and / or video devices, wherein the system comprises a first device and a second device, the first device being a video device capable of capturing a stream of images of the room and the second device being an audio and/or video device, and wherein the system comprises one or more processing units configured to:
   obtaining a first image captured by the first device; and
   creating a spatial model of the room by processing the first image to identify the second device and estimate the location of the second device in the room.
2. System according to item 1, wherein the one or more processing units are configured to process the first image and identify the location of the second device in the room by using a machine learning data architecture trained to identify audio and/or video devices in images.
3. System according to item 2, wherein the machine learning data architecture is further trained to identify the position of audio and/or video devices relative to the device capturing the image and wherein the machine learning data architecture is further configured to estimate the location of the second device relative to the first device.
4. System according to items 2 or 3, wherein the machine learning data architecture is further trained to identify the orientation of audio and/or video devices relative to the device capturing the image and wherein the machine learning data architecture is further configured to estimate the orientation of the second device relative to the first device.
5. System according to any one of items 2 to 4, wherein the machine learning data architecture is further trained to identify the position of elements of the room relative to the first device and wherein the machine learning data architecture is further configured to estimate the position of elements of the room relative to the first device.
6. System according to item 5, wherein the elements of the room are the ceiling, the floor, and / or the walls.
7. System according to any one of items 1 to 6, wherein the second device is an audio and video device and wherein the one or more processing units are further configured to:
   obtaining a second image captured by the second device; and
   creating the spatial model of the room by processing the first image and the second image.
8. System according to any one of items 1 to 7, wherein the first device comprises a first processing unit, the first processing unit being a processing unit of the one or more processing units.
9. System according to any one of items 1 to 8, wherein the system comprises a second processing unit arranged outside of the room, the second processing unit being a processing unit of the one or more processing units and the first device being communicatively coupled to the second processing unit.
10. System according to any one of items 1 to 9, wherein the first device and the second device are configured to be automatically communicatively paired in response to the identification of the second device in the first image.
11. System according to any one of items 1 to 10, wherein the one or more processing units are configured to use the spatial model for processing an audio signal recorded in the room or an audio signal that are to be played back in to room, preferably the audio signal is processed to provide:
   voice pickup optimization;
   noise suppression;
   echo cancelation;
   source localization;
   playback optimization;
   dynamic volume adjustment; or
   individual listening zones.
12. Video device for use in a system for creating a spatial model of a room according to any one of items 1 to 11, wherein the video device is configured to:
   capture a first image of a second device in the room;
   provide one or more processing units with the first image allowing the one or more processing units to create a spatial model of the room by processing the first image to identify the second device and estimate the location of the second device in the room.
13. Video device according to item 12, wherein the video device comprises a first processing unit, the first processing unit being configured to:
   create a spatial model of the room by processing the first image to identify the second device and estimate the location of the second device in the room.
14. Video device according to item 13, wherein the second device is an audio and video device, and wherein the processing unit is further configured to:
   obtain a second image captured by the second device; and
   create the spatial model of the room by processing the first image and the second image.
15. A method for creating a spatial model of a room comprising a first device and a second device, wherein the first device being a video device capable of capturing a stream of images of the room and the second device being an audio and/or video device, and wherein the method comprises:
   obtaining a first image captured by the first device; and
   creating a spatial model of the room by processing the first image to identify the second device and estimate the location of the second device in the room.
16. Method according to item 15, wherein a machine learning data architecture trained to identify audio and/or video devices in images is used to process the first image.
17. Method according to item 16, wherein the machine learning data architecture is further trained to identify the postion of audio and/or video devices relative to the device capturing the image and wherein the machine learning data architecture is further used to estimate the location of the second device relative to the first device.
18. Method according to item 17, wherein the machine learning data architecture is further trained to identify the orientaion of audio and/or viedo devices relative to the device capturing the image and wherein the machine learning data architecture is further used to estimate the orientation of the second device relative to the first device.
19. Method according to any one of items 16 to 18, whererin the machine learning data architecture is further trained to identify the position of elements of the room relative to the first device and wherein the machine learning data architecture is further used to estimate the position of elements of the room relative to the first device.
20. Method according to item 19, wherein the elements of the room are the ceiling, the floor, and / or the walls.
21. Method according to any one of items 15 to 20, wherein the second device is an audio and video device and wherein the method further comprises:
   obtaining a second image captured by the second device;
   creating the spatial model of the room by processing the first image and the second image.
22. Method according to any one of items 15 to 21, wherein the first device comprises a first processing unit, the first processing unit being a processing unit used for creating the spatial model of the room by processing the first image and / or the second image.
23. Method according to any one of items 15 to 22, wherein a second processing unit is arranged outside of the room, the first device being communicatively coupled to the second processing unit and wherein first processing unit and / or the second processing unit are used for creating the spatial model of the room by processing the first image and / or the second image.
24. Method according to any one of items 15 to 23, wherein the first device and the second device are configured to be automatically communicatively paired in response to the identification of the second device in the first image.
25. Method according to any one of items 15 to 24, wherein the spatial model is used for processing an audio signal recorded in the room or an audio signal that are to be played back in to room, preferably the audio signal is processed to provide:
   voice pickup optimization;
   noise suppression;
   echo cancelation;
   source localization;
   playback optimization;
   dynamic volume adjustment; or
   individual listening zones.
26. A computer program product comprising program code means adapted to cause a data processing system to perform the steps of the method according to any one of items 15 to 25, when said program code means are executed on the data processing system.
27. A computer program product according to item 26, wherein said computer program product comprises a non-transitory computer-readable medium having stored thereon the program code means.
28. Meeting room for conducting an online meeting, the meeting room comprising a display for displaying a stream of images of the online meeting and a video device according to any one of items 12 to 14, the video device forming part of a system according to any one of items 1 to 11, and wherein the system being configured to create a spatial model of the room for enhancing the online meeting.

## Claims

1. A system for creating a spatial model of a room comprising a plurality of audio and / or video devices, wherein the system comprises a first device and a second device, the first device being a video device capable of capturing a stream of images of the room and the second device being an audio and/or video device, and wherein the system comprises one or more processing units configured to:
obtaining a first image captured by the first device; and
creating a spatial model of the room by processing the first image to identify the second device and estimate the location of the second device in the room.

2. System according to claim 1, wherein the one or more processing units are configured to process the first image and identify the location of the second device in the room by using a machine learning data architecture trained to identify audio and/or video devices in images.

3. System according to claim 2, wherein the machine learning data architecture is further trained to identify the position of audio and/or video devices relative to the device capturing the image and wherein the machine learning data architecture is further configured to estimate the location of the second device relative to the first device.

4. System according to claims 2 or 3, wherein the machine learning data architecture is further trained to identify the orientation of audio and/or video devices relative to the device capturing the image and wherein the machine learning data architecture is further configured to estimate the orientation of the second device relative to the first device.

5. System according to any one of claims 1 to 4, wherein the second device is an audio and video device and wherein the one or more processing units are further configured to:
obtaining a second image captured by the second device; and
creating the spatial model of the room by processing the first image and the second image.

6. System according to any one of claims 1 to 5, wherein the first device comprises a first processing unit, the first processing unit being a processing unit of the one or more processing units.

7. System according to any one of claims 1 to 6, wherein the system comprises a second processing unit arranged outside of the room, the second processing unit being a processing unit of the one or more processing units and the first device being communicatively coupled to the second processing unit.

8. System according to any one of claims 1 to 7, wherein the one or more processing units are configured to use the spatial model for processing an audio signal recorded in the room or an audio signal that are to be played back in to room, preferably the audio signal is processed to provide:
voice pickup optimization;
noise suppression;
echo cancelation;
source localization;
playback optimization;
dynamic volume adjustment; or
individual listening zones.

9. Video device for use in a system for creating a spatial model of a room according to any one of claims 1 to 8, wherein the video device is configured to:
capture a first image of a second device in the room;
provide one or more processing units with the first image allowing the one or more processing units to create a spatial model of the room by processing the first image to identify the second device and estimate the location of the second device in the room.

10. Video device according to claim 9, wherein the video device comprises a first processing unit, the first processing unit being configured to:
create a spatial model of the room by processing the first image to identify the second device and estimate the location of the second device in the room.

11. Video device according to claim 10, wherein the second device is an audio and video device, and wherein the processing unit is further configured to:
obtain a second image captured by the second device; and
create the spatial model of the room by processing the first image and the second image.

12. A method for creating a spatial model of a room comprising a first device and a second device, wherein the first device being a video device capable of capturing a stream of images of the room and the second device being an audio and/or video device, and wherein the method comprises:
obtaining a first image captured by the first device; and
creating a spatial model of the room by processing the first image to identify the second device and estimate the location of the second device in the room.

13. A computer program product comprising program code means adapted to cause a data processing system to perform the steps of the method according to claim 12, when said program code means are executed on the data processing system.

14. A computer program product according to claim 13, wherein said computer program product comprises a non-transitory computer-readable medium having stored thereon the program code means.

15. Meeting room for conducting an online meeting, the meeting room comprising a display for displaying a stream of images of the online meeting and a video device according to any one of claims 9 to 11, the video device forming part of a system according to any one of claims 1 to 8, and wherein the system being configured to create a spatial model of the room for enhancing the online meeting.
